# EUROPÄISCHE PATENTSCHRIFT

(11) **EP 3 289 999 B1**
(45) Veröffentlichungstag und Bekanntmachung des Hinweises auf die Patenterteilung: **23.10.2019**
(21) Anmeldenummer: 16187371.6
(22) Anmeldetag: 06.09.2016
(51) Int. Cl.: A61C 13/00

(54) **DENTALFRAESMASCHINE**
DENTAL MILLING MACHINE
FRAISEUSE DENTAIRE

(43) Veröffentlichungstag der Anmeldung: 07.03.2018
(73) Patentinhaber: Ivoclar Vivadent AG, 9494 Schaan (LI)
(72) Erfinder: Rohner, Gottfried, 9450 Altstätten (CH); Bodgan, Vadim, 75175 Pforzheim (DE); Lidan, Senad, 9470 Buchs (CH)
(74) Vertreter: Baronetzky, Klaus

(56) Entgegenhaltungen:
- EP-A1- 3 012 065
- CN-A- 104 096 696
- DE-A1-102011 109 939
- US-A1- 2011 083 307

## Beschreibung

Die Erfindung betrifft eine Dentalfräsmaschine, gemäß dem Oberbegriff von Anspruch 1.

Es ist seit langem bekannt, Dentalfräsmaschinen, unter die hier auch andere dentale Bearbeitungsmaschinen für die spanabhebende Bearbeitung von Werkstücken subsumiert werden sollen, mit Mitteln zu versehen, die anfallenden Späne aus dem Bearbeitungsbereich entfernen. Als vergleichsweise effizient hatte es sich herausgestellt, hierzu einen Saugluftstrom zu erzeugen, der den Bearbeitungsbereich durchtritt und Luft zusammen mit den erfassten Spänen aus dem Fräsraum absaugt. Typischerweise wird dem Fräsraum hierzu Frischluft - oder aber Umluft - oberhalb des Bearbeitungsbereichs zugeführt, und ein Sauganschluss ist unterhalb des Bearbeitungsbereichs vorgesehen.

Da bei dieser Lösung die Reinigungswirkung häufig nicht befriedigend ist, hat es zahlreiche Versuche gegeben, die Spanabfuhr zu verbessern. So ist es aus der DE 40 27 107 A1 bekannt geworden, den Fräsraum und damit - strömungstechnisch betrachtet - den Saugraum zu verkleinern. Dies führt jedoch dazu, dass der Bewegungsweg, der für Werkstück und Werkzeug zur Verfügung steht, eingeschränkt ist. Zwar lässt sich dieses Problem durch Wahl einer geschickten Achsenverteilung zumindest reduzieren. Es ist jedoch eher aufwändig, besonders gestaltete Bewegungsarme für beengte räumliche Verhältnisse bereitzustellen, und gegebenenfalls leidet dann auch die Fräsgenauigkeit.

Es ist auch vorgeschlagen worden, den Bearbeitungsbereich mit Blasdüsen zu versehen, um die dort anfallenden Späne aufzuwirbeln und zu verhindern, dass sie sich dort ablagern. Typischerweise ändert sich jedoch der Ort der tatsächlichen Bearbeitung während des Fräsvorgangs permanent, so dass eine Vielzahl von Blasdüsen bereitgestellt werden muss. Die je nicht an den aktuellen Bearbeitungsort weisenden Blasdüsen blasen dann gleichsam leer, sodass eine derartige Lösung jeher ineffizient ist.

Auch hinsichtlich der Blasdüsen sind zahlreiche Verbesserungen vorgeschlagen worden. So ist es aus der EP 3 012 065 A1 bekannt geworden, die Düsen mit Elektroden zu versehen, die ein elektrisches Feld zur Deionisierung der Späne bereitstellen. Diese Lösung ist bei der Verwendung von dentalen Kunststoffmaterialien ausgesprochen Vorteilhaft, da diese dann nicht mehr dazu neigen, sich aufgrund elektrostatischer Kräfte haftend an Oberflächen des Fräsraums abzusetzen.

Bei anderen dentalen Werkstoffen wie Keramiken ist die Neigung von Frässtaub, sich elektrostatisch aufzuladen, ohnehin geringer.

Ferner sind verschiedene Versuche bekannt geworden, die Abfuhr von Frässtaub bzw. von Frässpänen strömungstechnisch zu optimieren. Als Beispiel sei hierfür auf die DE 20 2015 100 312 U1 verwiesen. Bei dieser Lösung ist es vorgesehen, einen gleichmäßigen Luftstrom zu erzeugen, der auch die freiliegenden Schäfte von Werkzeugen eines Werkzeugmagazins erfassen Dentalfräsmaschinen sind aus EP 3 012 065 A1 und DE 10 2011 109 939 A1 bekannt. Eine Bearbeitungsmaschine mit Fräswerkzeug ist aus US 2011/0083307 A1 bekannt.

Ferner ist es auch bereits vorgeschlagen worden, an zwei oberen und voneinander beabstandeten Raumecken des Fräsraums Zuluftdüsen anzuordnen und unterhalb des Bearbeitungsbereichs eine zentrale Absaugöffnung vorzusehen.

Nachteilig hierbei ist jedoch, dass bei der Entnahme des fertig gestellten Werkstücks dieses bei etwas nachlässiger Handhabung unmittelbar in den Sauganschluss fallen kann, sodass die zahntechnische Arbeit dann verloren ist. Zudem hat der Zahntechniker wegen dieses "Kloschüsseleffekts" bei der Bedienung ein unsicheres Gefühl, aufgrund der befürchtung, dass das Restaurationsergebnis verloren geht, was die Akzeptanz einer derartigen Lösung deutlich einschränkt.

Demgegenüber liegt der Erfindung die Aufgabe zugrunde, eine Dentalfräsmaschine gemäß Anspruch 1 zu schaffen, die eine bessere Akzeptenz aufweist, aber dennoch ein sauberes und störungsfreies Arbeiten ermöglicht.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, dass eine Dentalfräsmaschine einen in sich geschlossenen und besonders gestalteten Fräsraum aufweist. Typischerweise sind die Fräsräume von Fräsmaschinen aus miteinander verschraubten oder in anderer Weise befestigten Blechen realisiert, wobei teilweise auch andere Materialien zum Einsatz gelangen. Demgegenüber ist erfindungsgemäß eine einstückige Gestaltung aus einem geeigneten Material wie Kunststoff bevorzugt und wird erfindungsgemäß eingesetzt. Der Fräsraum weist dann bevorzugt keine Innenecken aus, zumindest im unteren Bereich nicht, so dass sich dort keine Späne und kein Frässtaub ablagern kann.

Die Übergänge zwischen der Bodenwand und den Seitenwänden sind je abgerundet mit Radien, die mindestens mehrere Millimeter betragen, bevorzugt aber an den relevanten Stellen mehrere Zentimeter, beispielsweise 10cm.

Die Bodenwand des Fräsraums ist dann bevorzugt nach der Art einer Hohlkehle ausgebildet, die sich mit einem Radius von beispielsweise ebenfalls ca. 10cm unterhalb des Bearbeitungsbereichs und quer durch den Fräsraum erstreckt. Die Neigung der Bodenwand ist zudem bevorzugt schräg, und zwar so, dass die unterste Stelle der Bodenwand an den Sauganschluss mündet. Demgegenüber ist die Bodenwand unterhalb des Bearbeitungsbereichs deutlich höher, so dass dort anfallender Frässtaub oder Frässpäne bereits aufgrund der Schwerkraft leicht dem Sauganschluss zugeführt werden.

Insbesondere aber unterstützt die Schrägstellung der Bodenwand die Strömung vom Zuluftanschluss zum Sauganschluss über den Boden hinweg, zumal keine Hindernisse wie Hinterschneidungen im Verlauf der Bodenwand ausgebildet sind.

In vorteilhafter Ausgestaltung ist der Zuluftanschluss dem Sauganschluss diametral gegenüberliegend, und zwar an einer oberen Ecke des Fräsraums. Mindestens eine Düse, bevorzugt mehrere Düsen, sind auf den Bearbeitungsbereich gerichtet, so dass dieser abgeblasen wird.

In weiterer vorteilhafter Ausgestaltung ist eine Bodenspüldüse realisiert. Diese bläst Luft senkrecht nach unten, so dass die Luftströmung dieser Düse an der benachbarten Seitenwand entlanggleitet und dann über den ausgesprochen großen Umlenkradius in die Hohlkehle eingeleitet wird und dort als laminare Strömung etwaige Ablagerungen zum Sauganschluss bläst.

Besonders günstig ist es, wenn die Neigung der Bodenwand ausgehend von dem Umlenkradius unterhalb der Luftzufuhr im Wesentlichen konstant ist und zumindest nicht abnimmt. Dadurch wird die Neigung, dort Ablagerungen zu bilden, im Vergleich zum Stand der Technik deutlich reduziert.

In modifizierter Ausgestaltung ist es vorgesehen, dass die Neigung der Bodenwand zum Sauganschluss hin noch sogar etwas zunimmt, beispielsweise von 18 auf 23 Grad. Hiermit lässt sich berücksichtigen, dass die Strömungsgeschwindigkeit aufgrund der Luftzufuhr-Düse über den Verlauf der Bodenwand abnimmt, da der Strömungsquerschnitt insgesamt zunimmt, so dass die Neigung der Späne anzuhaften, in Richtung Sauganschluss aufgrund der geringeren Strömungsgeschwindigkeit größer wird, welche Erscheinung jedoch durch den größeren Neigungswinkel der Bodenwand kompensiert wird.

Während die Realisierung des erfindungsgemäßen Fräsraums als einstückiges Formteil bevorzugt ist, bedeutet dies nicht, dass keine Türöffnung für den Fräsraum vorgesehen sein könnte. Die Tür ist bevorzugt von der Bodenwand deutlich beabstandet, so dass die wichtige Spanabfuhr durch die Tür nicht behindert wird.

Dies gilt sinngemäß in gleicher Weise für Durchbrechungen, die für die sonstige Bedienung des Fräsraums erforderlich sind, beispielsweise die Antriebsspindel, Bedienarme wie ein Roboterarm für das Werkstück oder aber Durchbrechungen für den Werkstückswechsel oder für den Werkzeugwechsel.

Bevorzugt ist der Bearbeitungsbereich - bezogen auf die Mitte des Fräsraums - der Luftzufuhr näher benachbart als dem Sauganschluss. Hierdurch lässt sich bei einem vergleichsweise kleinen Strömungsquerschnitt eine vergleichsweise starke Luftströmung bereitstellen, die eine gute Ablasewirkung des Bearbeitungsbereichs ermöglicht.

Erfindungsgemäß besonders günstig ist es, dass die Bodenwand dem Grunde nach der Art einer Hohlkehle ausgebildet sein kann. Im Seitenschnitt betrachtet weist der Fräsraum im unteren Bereich insofern im Wesentlichen die Form eines "U" auf. Hierdurch werden Staubpartikel oder Späne der zentralen Mitte der Hohlkehle zugeführt, wo sie sich anhäufen können und insofern einen Strömungswiderstand bilden, der ihre Abfuhr begünstigt.

Es versteht sich, dass die exakte Form des Hohlkehlenquerschnitts in weiten Bereichen an die Erfordernisse anpassbar ist. So kann zum Beispiel der Querschnitt etwas spitzer gewählt werden, also etwas "V"-förmiger, wobei jedoch darauf zu achten ist, dass nicht durch einen zu kleinen Radius die Strömungsgeschwindigkeit abnimmt.

Erfindungsgemäß günstig ist es auch, dass unterhalb des Bearbeitungsbereichs eine gleichmäßige und geschlossene Fläche in Form der Bodenwand vorliegt. Auch wenn sich der Bearbeitungsbereich bewegt, was bei einer Vier-Achs-Fräsmaschine oder einer Fünf-Achs-Fräsmaschine regelmäßig der Fall ist, erfolgt das Abblasen des Bearbeitungsbereichs stets im Bereich vor den Düsen der Luftzufuhr und stets oberhalb der geschlossenen und glatten Bodenwand. Ein etwaiges versehentlich herabfallendes Restaurationsteil würde auf dieser liegenbleiben und könnte vom Bediener ohne weiteres verwendet werden.

Die erfindungsgemäße Dentalfräsmaschine ist sowohl für den Nassbetrieb als auch für den Trockenbetrieb geeignet. Für den Nassbetrieb lassen sich die Deionisierelektroden abschalten und in vorteilhafter Ausgestaltung der Erfindung ist es vorgesehen, dass mit einer Umschaltklappe zwischen einem Nassauslass und einer für den Trockenbetrieb bestimmten Saugleitung umgeschaltet wird. Die Umschaltklappe kann bevorzugt mit einem Gelenk an der Oberseite des Anschlusses versehen sein. In geschlossenen Zustand wird dann die Luft davor nach oben abgeleitet, und gegebenenfalls im unteren Bereich an der Klappe verbleibende Ablagerungen könnten weggespült werden, wenn auf Nassbetrieb umgeschaltet wird und damit der Ablauf geöffnet wird.

In vorteilhafter Ausgestaltung ist es vorgesehen, dass die Umschaltklappe, die auch als Schieber ausgebildet sein kann, alternativ entweder die Luftdüsen abdeckt und die Deionisierelektroden freigibt, wie es für das Fräsen von PMMA oder sonstigen Kuststoffen günstig ist, oder die Deionisierelektroden abdeckt und die Lufteinlässe freigibt, wie es für das Fräsen von Keramik oder für das Nassfräsen erwünscht ist.

Es ist auch möglich, anstelle eines Umschaltelements zwei separate Absperrelemente zu verwenden, die je nach Anwendungsfall zum Einsatz gelangen können. Das Absperren der Deionisierdüsen beispielsweise beim Nassfräsen hat den Vorteil, dass diese dann nicht durch Fräsmehl verschmutzt werden.

Die Klappe dichtet insofern gegen eine untere ebene Gleitfläche, die hinterschneidungsfrei ausgebildet ist und bei geöffneter Klappe einen glatten Übergang zwischen dem Bereich des Auslasses vorder Umschaltklappe und dem Bereich des Auslasses nach der Umschaltklappe bietet.

Das für die Herstellung des Fräsraums verwendete Kunststoffteil kann in beliebiger geeigneter Weise erzeugt werden, wobei eine glatte Innenfläche wesentlich ist. Beispielsweise kann es durch Schleuderguss erzeugt werden.

Erfindungsgemäß besonders günstig ist es, wenn sich der Auslass in der Verlängerung der hohlkehligen Bodenwand seitlich wegerstreckt. Gerade bei der Naßbearbeitung führt dies zu einer ungehinderten Wasserströmung, die mitgeführte Späne mitreisst, ohne dass es am Auslass des Fräsraums zu einer nennenswerten Strömungsumlenkung kommen würde.

Weitere Vorteile, Einzelheiten und Merkmale ergeben sich aus der nachfolgenden Beschreibung mehrerer Ausführungsbeispiele der Erfindung anhand der Zeichnung.

Es zeigen:
- Fig. 1: eine schematische Ansicht einer Ausführungsform einer erfindungsgemäßen Dentalfräsmaschine;
- Fig. 2: eine Seitenansicht des Fräsraums der Maschine gemäß Fig. 1;
- Fig. 3: ein Horizontalschnitt durch die Ausführungsform gemäß Fig. 1 und 2;
- Fig. 4: eine schematische Ansicht einer Ausführungsform eines erfindungsgemäßen Fräsraums einer Dentalfräsmaschine; und
- Fig. 5: eine Detailansicht zu einer Ausführungsform einer erfindungsgemäßen Dentalfräsmaschine.

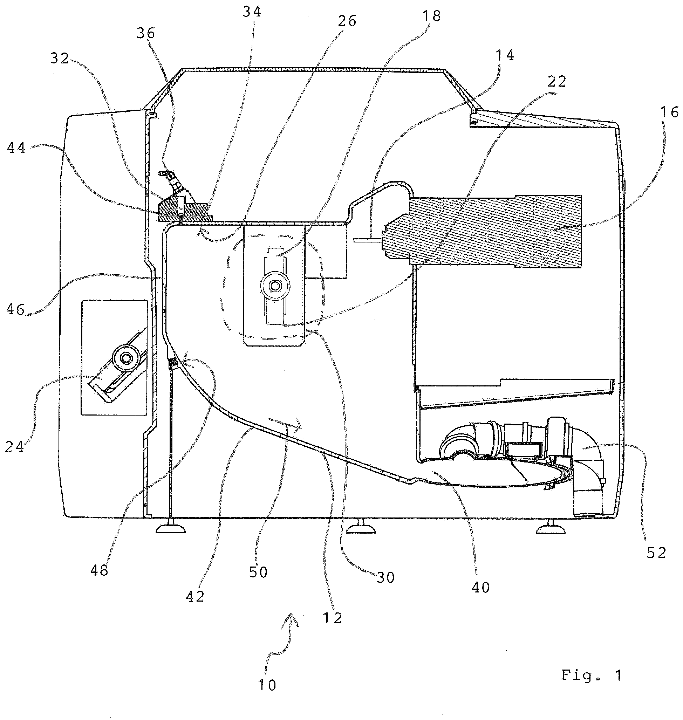

Die in Fig. 1 dargestellte Dentalfräsmaschine 10 weist einen Fräsraum 12 auf, der in besonderer Weise gestaltet ist. Der Fräsraum 12 ist ein geschlossenes Element und besteht aus einem Material mit einer glatten und nicht-haftenden Oberfläche wie beispielsweise Kunstoff. In an sich bekannter Weise nimmt er eine Spindel 14 auf, die als Werkzeug dient und von einem Spindelmotor 16 angetrieben ist. Ferner nimmt er das Werkstück 19 auf, das in einem Werkstückhalter 22 gelagert ist. Über eine Mehrzahl von Bewegungsachsen lässt sich die relative Position zwischen Werkstück 18 und Spindel 14 ändern, beispielsweise in fünf Achsen.

Für den Wechsel des Werkstücks ist eine rückwärtige Wand des Fräsraums 12 mit einer Tür versehen, und hinter dem Fräsraum ist ein Magazin mit weiteren Werkstücken angeordnet, von denen ein weiteres Werkstück 24 in Fig. 1 sichtbar ist.

Ferner ist die Vorderwand des Fräsraums 12 im oberen Bereich mit einer Zugangstür versehen.

Die in der Darstellung gemäß Fig. 1 linke obere Seite des Fräsraums 12 nimmt eine Zuluftöffnung 26 auf, die je mehrere Düsen aufweist. Die Düsen sind überwiegend auf einen Bearbeitungsbereich 30 gerichtet, in welchem die Spindel das Werkstück spanabhebend bearbeitet. Die Düsen 32 sind an einem Düsenträger 34 befestigt, der seinerseits außen an dem Fräsraum 12 angebracht ist.

Im Bereich des Düsenträgers 34 sind zu dem Elektroden 36 angeordnet, die mit elektrischer Spannung zum Deionisieren der zugeführten Luft beaufschlagt sind. Die Beaufschlagung erfolgt beim Trockenbetrieb, während die Elektroden beim Nassbetrieb der Dentalfräsmaschine 10 durch einen nicht-dargestellten Schieber verschlossen werden. Somit lassen sich entweder die Deionisierelektroden 36 oder die Düsen 32 von dem Schieber abdecken.

Von der linken oberen Ecke gemäß Fig. 1 ausgehend strömt die bereitgestellte Zuluft zum Bearbeitungsbereich 30 und über diesen hinaus zu einem Auslass 40. Der Auslass 40 liegt der Zuluftöffnung 26 diametral gegenüber. Schwebeteilchen, beispielsweise Frässtaub, werden so aus dem Fräsraum entfernt und mit der Luftströmung abgeführt.

In vielen Fällen entstehen jedoch auch Frässpäne, die aufgrund ihres Gewichts nach unten fallen, in den Bereich der Bodenwand 42 des Fräsraums. Erfindungsgemäß ist es nun vorgesehen, die Bodenwand 42 des Fräsraums zu neigen, und zwar so, dass sie zum Auslass 40 hinabfällt, insbesondere mit einer im wesentlichen konstanten Steigung. Die Frässpäne neigen aufgrund ihres Eigengewichts dazu, in diese Richtung zu rutschen.

In besonders vorteilhafter Ausgestaltung ist zusätzlich noch eine gezielte Mitnahmeströmung für die Bodenwand bereitgestellt, die von einer Düse 44 erzeugt wird. Die Düse 44 lässt Luft senkrecht nach unten entlang der Seitenwand 46 strömen. Unten anschließend an die Seitenwand 46 ist eine Strömungsumlenkung 48 mit einem sehr großen Radius von beispielsweise etwa dem halben Durchmesser des Fräsraums angeordnet. Die Strömung aus der Düse 44 verläuft daher im Wesentlichen laminar über die Strömung an der Seitenwand 46 lang, weiter an der Strömungsumlenkung 48 entlang und dann über die Bodenwand 42 hinweg. Dort nimmt diese Mitnahmeströmung 50 dort befindliche Späne mit und führt sie dem Auslass 40 zu.

Der Auslass 40 ist hierzu bevorzugt über eine Saugleitung 52 an eine nicht dargestellte Unterdruckquelle angeschlossen. Am Auslass 40 entsteht daher Unterdruck, was die Strömungsgeschwindigkeit dort erhöht.

Durch die erzeugte Mitnahmeströmung 50 lässt sich zudem beobachten, dass ein herunterfallender Frässpan gar nicht bis zur Bodenwand 42 gelangt, sondern von der Mitnahmeströmung 50 gleich mitgeführt und dem Auslass 40 zugeführt wird.

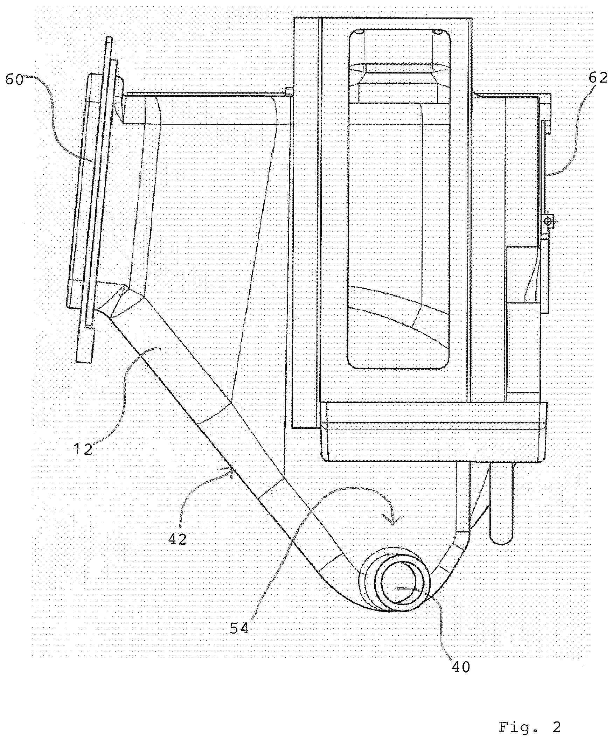

Aus Fig. 2 ist ersichtlich, in welcher Weise der Fräsraum 12 in seitlicher Vertikalansicht ausgebildet sein kann. Der Fräsraum 12 ist im Bereich der Bodenwand 42 nach der Art einer Hohlkehle ausgebildet und weist eine im wesentlichen "U"- oder "V"-förmige Gestalt auf. In ähnlicher Weise wie beispielsweise eine Regenrinne wird umherfliegender Frässtaub dem zentralen Bereich 54 der Bodenwand 42 zugeleitet und kann so mit der Mitnahmeströmung 50 dem Auslass 40 zugeleitet werden.

Aus Fig. 2 ist zudem ersichtlich, dass im oberen/vorderen Bereich des Fräsraums eine Tür 60 ausgebildet ist, über welche der Fräsraum öffenbar ist.

Eine Rückseitige Tür 62, die ebenfalls recht weit oben angeordnet ist, ist im Fräsbetrieb verschlossen und dient dem Werkstückwechsel.

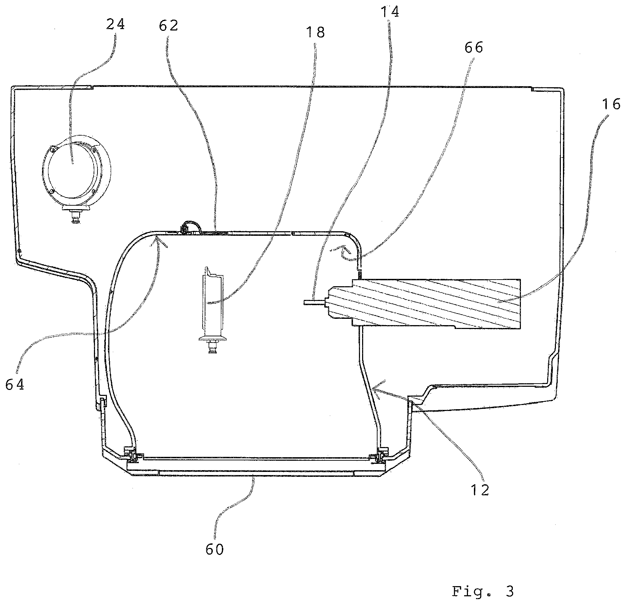

Aus Fig. 3 ist eine Dentalfräsmaschine 10 in erfindungsgemäßer Ausgestaltung im Horizontalschnitt ersichtlich. Gleiche Bezugszeichen weisen hier wie auch in weiteren Figuren auf gleiche oder entsprechende Teile hin. Wie ersichtlich ist, weist der Fräsraum 12 gerundete Ecken 64 und 66 auf, so dass nicht die Gefahr besteht, dass sich dort Frässpäne ablagern.

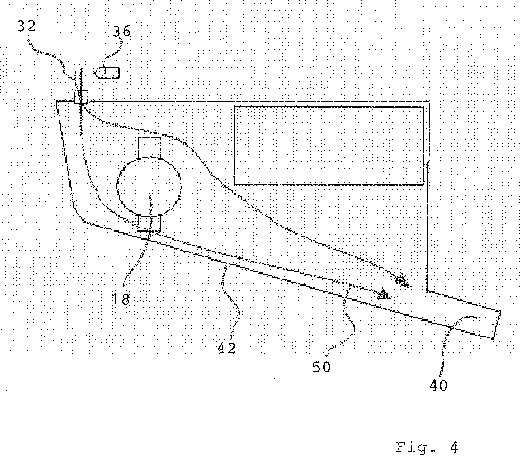

Eine weitere Ausführungsform einer erfindungsgemäßen Dentalfräsmaschine ist aus Fig. 4 schematisch ersichtlich. Der Bearbeitungsbereich und mit ihm das Werkstück 18 sind im linken Drittel des Fräsraums 12 angeordnet, also den Düsen 32 eng benachbart. An dieser Stelle weist die Luftströmung eine vergleichbar große Strömungsgeschwindigkeit auf, während diese zum Auslass 40 typischerweise aufgrund des größeren Strömungsquerschnitts sinkt. Die Bodenwand 42 weist auch bei der Ausführungsform gemäß Fig. 4 eine gleichbleibende Neigung auf.

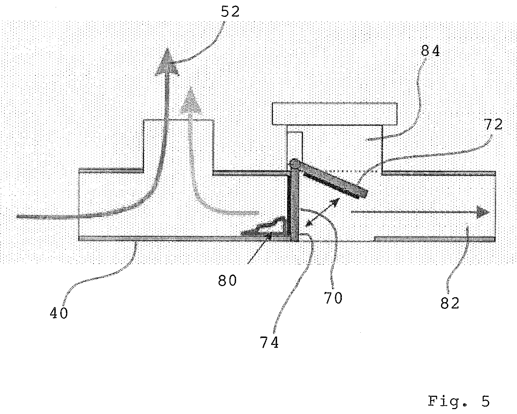

Aus Fig. 5 ist eine Umschaltvorrichtung für Nass- und Trockenbetrieb ersichtlich. Eine Umschaltklappe 70 lässt sich zwischen der oberen in Fig. 5 dargestellten Nassposition 72 und der unteren sich vertikal erstreckende Trockenposition 74 verschwenken. Die Achse der Umschaltklappe 70 befindet sich oben an der zugehörigen Leitung.

In der Trockenposition 74 ist die Umschaltklappe 70 geschlossen. Die Luftströmung durch den Auslass 40 erfolgt zu der Saugleitung 52 hin, die vor der Umschaltklappe 70 abzweigt. An der Umschaltklappe 70 können sich bei dieser Ausgestaltung Ablagerungen bilden.

Wenn nun auf den Nassbetrieb umgeschaltet, wird die Umschaltklappe 70 in die Nassposition 72 verschwenkt. In dieser Position liegen die Ablagerungen 70 frei in dem den Auslass 40 durchtretenden Spülwässer, so dass die Wasserströmung die Ablagerungen 70 mit wegspült und dem Abwasseranschluss 82 zuleitet.

Oberhalb der Umschaltklappe 70 ist bei der hier dargestellten Ausführungsform zudem ein Wartungsschacht 84, der in an sich bekannte Weise eine gelegentliche Grundreinigung und Wartung ermöglicht.

## Patentansprüche

1. Dentalfräsmaschine, mit einem geschlossenen Fräsraum (12), der eine Zuluft-Öffnung und einen Auslass (40) aufweist, die einander im Wesentlichen, bezogen auf den Fräsraum (12), gegenüberliegen und einen Luftstrom erzeugen, der einen Bearbeitungsbereich, an welchem ein Fräswerkzeug eine Fräsbearbeitung eines Fräswerkstücks vornimmt, überstreicht, wobei eine Seite des Fräsraums (12), insbesondere die Vorderseite, eine öffenbare Tür aufweist, **dadurch gekennzeichnet, dass** die Bodenwand (42) des Fräsraumes (12) mindestens teilweise schräg verlaufend und ausgerundet ausgebildet ist, wobei die Bodenwand (42) unterhalb des Bearbeitungsbereichs (30) geschlossen ist und eine im Wesentlichen konstante Neigung aufweist, und dass sich der Auslass (40) an dem untersten Bereich der Bodenwand (42) anschließt.

2. Dentalfräsmaschine nach Anspruch 1, **dadurch gekennzeichnet, dass** der Fräsraum (12) durch ein einstückiges Formteil, insbesondere aus Kunststoff, gebildet ist, das eine spanabweisende und/oder nicht-haftende Oberfläche aufweist.

3. Dentalfräsmaschine nach Anspruch 1 oder 2, **dadurch gekennzeichnet, dass** die Rückwand des Fräsraums (12) eine bewegliche Teilwand oder eine rückseitige Tür (62) für die Hindurchführung eines Fräswerkstücks und/oder eines Fräswerkzeugs aufweist.

4. Dentalfräsmaschine nach einem der vorhergehenden Ansprüche, **dadurch gekennzeichnet, dass** die Bodenwand (42) des Fräsraums (12) zu dem Auslass (40) der Abluft-Öffnung hin monoton fallend ausgebildet ist und insbesondere eine Hohlkehle bildet.

5. Dentalfräsmaschine nach einem der vorhergehenden Ansprüche, **dadurch gekennzeichnet, dass** der Auslass (40) an einer äußeren unteren Ecke des Fräsraums (12) angebracht ist und mindestens eine Luftdüse und/oder der Zuluft-Öffnung (26) an einer oberen Ecke, dem Sauganschluss diametral gegenüberliegend sind.

6. Dentalfräsmaschine nach einem der vorhergehenden Ansprüche, wobei der Fräsraum **dadurch gekennzeichnet ist, dass** mindestens eine Luftdüse, insbesondere mehrere Luftdüsen (32) und/oder mindestens eine Deioniserelektrode (36), dem Auslass (40) diametral gegenüberliegend angeordnet sind, welche Luftdüsen (32) für das Trockenfräsen, insbesondere von Zirkondioxid, verschließbar sind.

7. Dentalfräsmaschine nach einem der Ansprüche 1 bis 5, **dadurch gekennzeichnet, dass** dem Auslass (40) gegenüberliegend Düsen und/oder Deionisierelektroden (36) vorgesehen sind, welche Düsen beim Nachfräsen und beim Fräsen von Keramik, insbesondere Zirkondioxidkeramik, geöffnet und beim Fräsen von Kunststoff geschlossen sind, und welche Deionisierelektroden (36) beim Nassfräsen und beim Fräsen von Keramik wie Zirkondioxid über Absperrelemente vom Fräsraum im Übrigen getrennt sind und beim Fräsen von Kunststoff frei gegeben sind.

8. Dentalfräsmaschine nach Anspruch 7, **dadurch gekennzeichnet, dass** mindestens eine Luftdüse, insbesondere eine Mehrzahl von nebeneinander angeordneten Luftdüsen (32), auf einen Bearbeitungsbereich (30) der Fräsmaschine ausgerichtet sind und dass der Bearbeitungsbereich (30) sich bezogen auf die zentrale Mitte des Fräsraums (12) insbesondere oberhalb der Mitte und jenseits der Mitte, von einem Auslass des Fräsraums (12) betrachtet, erstreckt.

9. Dentalfräsmaschine nach einem der vorhergehenden Ansprüche, **dadurch gekennzeichnet, dass** der Fräsraum (12) vollständig einstückig und hinterschneidungsfrei ausgebildet ist, insbesondere aus einem Kunststoffteil.

10. Dentalfräsmaschine nach einem der vorhergehenden Ansprüche, **dadurch gekennzeichnet, dass** der Auslass (40) am tiefsten Punkt des Fräsraums (12) angeflanscht ist und sich von diesem seitlich wegerstreckt und dass bei Nassbearbeitung ein Auslassschlauch oder ein Auslassrohr sich seitlich und/oder nach unten von dem Auslass (40) wegerstreckt.

11. Dentalfräsmaschine nach Anspruch 10, **dadurch gekennzeichnet, dass** eine Umschaltklappe (70) oder ein Umschaltventil des Auslasses (40) für die Umschaltung zwischen Nassbearbeitung und Trockenbearbeitung vorgesehen ist.

12. Dentalfräsmaschine nach Anspruch 10 oder 11, **dadurch gekennzeichnet, dass** für die Trockenbearbeitung eine Saugleitung (52) unter Unterdruck setzbar ist, der auf den Auslass wirkt, und dass für die Nassbearbeitung der Auslass (40) druckfrei das Abwasser und/ oder den Frässchlamm ableitet.

13. Dentalfräsmaschine nach einem der vorhergehenden Ansprüche, **dadurch gekennzeichnet, dass** eine Umschaltklappe (70) zwischen dem Anschluss für die Trockenbearbeitung und dem Anschluss für die Nassbearbeitung ein obenliegendes Gelenk aufweist und in der geöffneten Position für die Nassbearbeitung eine ebene untere Gleitfläche freigibt, die hinterschneidungsfrei ausgebildet ist.

14. Dentalfräsmaschine nach einem der vorhergehenden Ansprüche, **dadurch gekennzeichnet, dass** die Neigung der Bodenwand (42) unterhalb des Bearbeitungsbereichs (30), also unterhalb des Werkstückträgers und des Werkzeugs, einen Neigungswinkel zwischen 5 und 60 Grad, bevorzugt zwischen 15 und 25 Grad und besonders bevorzugt etwa 20 Grad aufweist.

15. Dentalfräsmaschine nach einem der vorhergehenden Ansprüche, **dadurch gekennzeichnet, dass** der Luftstrom eine Mitnahmeströmung (50) aufweist, die sich entlang der Bodenwand (42) erstreckt und zum Auslass (40) gerichtet ist.

## Claims

1. A dental milling machine comprising a closed milling chamber (12) having a supply air opening and an outlet (40) which are substantially opposed to each other in relation to the milling chamber (12), and generating an airflow which passes across a machining area wherein a milling tool performs a milling operation on a milling workpiece, one side of the milling chamber (12), especially the front side, comprising an openable door, **characterized in that** the bottom wall (42) of the milling chamber (12) is formed to extend at least partially inclined and rounded, the bottom wall (42) being closed below the machining area (30) and having substantially constant inclination, and **in that** the outlet (40) connects to the lowermost region of the bottom wall (42).

2. The dental milling machine according to claim 1, **characterized in that** the milling chamber (12) is formed by an integral molded part, especially of plastic, which has a chip-repellent and/or non-adhesive surface.

3. The dental milling machine according to claim 1 or 2, **characterized in that** the rear wall of the milling chamber (12) comprises a movable sub-wall or a rear-side door (62) for the passage of a milling workpiece and/or a milling tool.

4. The dental milling machine according to one of the preceding claims, **characterized in that** the bottom wall (42) of the milling chamber (12) is formed to evenly decline towards the outlet (40) of the exhaust air opening, and especially forms a chamfer.

5. The dental milling machine according to one of the preceding claims, **characterized in that** the outlet (40) is mounted at an outer lower corner of the milling chamber (12) and at least one air nozzle and/or the supply air opening (26) at an upper corner are diametrically opposed to the suction port.

6. The dental milling machine according to one of the preceding claims, the milling chamber being **characterized in that** at least one air nozzle, especially several air nozzles (32) and/or at least one deionization electrode (36), are arranged diametrically opposite to the outlet (40), which air nozzles (32) are closeable for dry milling, especially for dry milling of zirconium dioxide.

7. The dental milling machine according to one of claims 1 to 5, **characterized in that** nozzles and/or deionization electrodes (36) opposing the outlet (40) are provided, which nozzles are open when performing post-milling and milling of ceramics, especially zirconium dioxide ceramics, and are closed when performing milling of plastics, and which deionization electrodes (36) are separated from the milling chamber via barrier elements when performing wet milling and when performing milling of ceramics such as zirconium dioxide, and are freely accessible when performing milling of plastics.

8. The dental milling machine according to claim 7, **characterized in that** at least one air nozzle, especially a plurality of air nozzles (32) arranged next to one another, are aligned with a machining area (30) of the milling machine, and **in that** the machining area (30), in relation to the central center of the milling chamber (12), extends especially above the center and beyond the center, as viewed from an outlet of the milling chamber (12).

9. The dental milling machine according to one of the preceding claims, **characterized in that** the milling chamber (12) is formed as being completely integral and having no undercuts, and especially is formed from a plastic part.

10. The dental milling machine according to one of the preceding claims, **characterized in that** the outlet (40) is flange-mounted at the lowermost point of the milling chamber (12) and extending laterally away therefrom, and **in that** when performing wet machining an outlet hose or an outlet pipe extends laterally and/or downwardly away from the outlet (40).

11. The dental milling machine according to claim 10, **characterized in that** a switching flap (70) or a switching valve of the outlet (40) is provided for switching between wet machining and dry machining.

12. The dental milling machine according to claim 10 or 11, **characterized in that** a suction line (52) can be set under vacuum for dry machining, which suction line acts on the outlet, and **in that**, for wet machining, the outlet (40) discharges the waste water and/or the milling sludge without any pressure application.

13. The dental milling machine according to one of the preceding claims, **characterized in that** a switching flap (70) between the dry machining terminal and the wet machining terminal comprises an top joint and, in the open position for performing wet machining, releases a flat lower sliding surface which is formed free of undercuts.

14. The dental milling machine according to one of the preceding claims, **characterized in that** the inclination of the bottom wall (42) below the machining area (30), i.e. below the workpiece carrier and the tool, has an angle of inclination between 5 and 60 degrees, preferably between 15 and 25 degrees and particularly preferably about 20 degrees.

15. The dental milling machine according to one of the preceding claims, **characterized in that** the air flow comprises an entrainment flow (50) which extends across the bottom wall (42) and is directed towards the outlet (40).

## Revendications

1. Machine de fraisage dentaire, avec un espace de fraisage fermée (12) qui a une ouverture d'air amené et une évacuation (40) qui sont essentiellement en face l'une de l'autre, par rapport à l'espace de fraisage (12), et produisent un flux d'air, qui balaie une zone de traitement à laquelle un outil de fraisage effectue un fraisage d'une pièce à fraiser, où une face de l'espace de fraisage (12) en particulier la face avant, présente une porte pouvant être ouverte, **caractérisée en ce que** la paroi de fond (42) de l'espace de fraisage (12) est formée au moins partiellement inclinée et arrondie, où la paroi de fond (42) est fermée en dessous de la zone d'usinage (30) et présente une inclinaison essentiellement constante, et que l'évacuation (40) se connecte à la zone la plus basse de la paroi de fond (42).

2. Machine de fraisage dentaire selon la revendication 1, **caractérisée en ce que** l'espace de fraisage (12) est formée par une pièce moulée une seule pièce, en particulier en plastique, qui présente une surface déflectrice de copeaux et/ou non-adhérente.

3. Machine de fraisage dentaire selon la revendication 1 ou 2, **caractérisée en ce que** la paroi arrière de l'espace de fraisage (12) présente une paroi partielle mobile ou une porte arrière (62) pour le passage d'une pièce à fraiser et/ou d'un outil de fraisage.

4. Machine de fraisage dentaire conformément à l'une des revendications précédentes, **caractérisée en ce que** la paroi de fond (42) de l'espace de fraisage (12) tombe de manière monotone vers l'évacuation (40) de l'ouverture d'air amené et forme en particulier un creux.

5. Machine de fraisage dentaire selon l'une des revendications précédentes, **caractérisée en ce que** l'évacuation (40) est montée sur un coin inférieur externe de l'espace de fraisage (12) et au moins une buse d'air et/ou l'ouverture d'air d'amené (26) sur un coin supérieur, sont diamétralement opposées à la connexion d'aspiration.

6. Machine de fraisage dentaire selon l'une des revendications précédentes, où l'espace de fraisage est **caractérisée en ce qu'**au moins une buse d'air, en particulier plusieurs buses d'air (32) et/ou au moins une électrode de désionisation (36) sont disposées diamétralement opposées à l'évacuation (40), ou lesdites buses d'air (32) peuvent être verrouillées pour le fraisage à sec, en particulier de dioxyde de zirconium.

7. Machine de fraisage dentaire selon l'une des revendications 1 à 5, **caractérisée en ce que** des buses et/ou des électrodes de déionisation (36) sont fournis en face de l'évacuation (40), où lesdites buses sont ouvertes lors du fraisage de finition et du fraisage de céramiques, en particulier de céramique de dioxyde de zirconium, et sont fermées lors du fraisage de matières plastiques, et où lesdites électrodes de déionisation (36) sont séparées de l'espace de fraisage pendant le fraisage à l'état humide et le fraisage de céramiques telles que le dioxyde de zirconium par des éléments de verrouillage et sont libérés lors du fraisage de matières plastiques.

8. Machine de fraisage dentaire selon la revendication 7, **caractérisée en ce qu'**au moins une buse d'air, en particulier une pluralité de buses d'air disposées côte à côte (32), sont alignés sur une zone d'usinage (30) de la machine de fraisage et que la zone d'usinage (30) s'étend par rapport au centre de l'espace de fraisage (12) en particulier au-dessus du milieu et au-delà du milieu, vus à partir d'une sortie de l'espace de fraisage (12).

9. Machine de fraisage dentaire selon l'une des revendications précédentes, **caractérisée en ce que** l'espace de fraisage (12) est formé entièrement en une seule pièce et sans contre-dépouille, en particulier à partir d'une pièce en plastique.

10. Machine de fraisage dentaire selon l'une des revendications précédentes, **caractérisée en ce que** l'évacuation (40) est bridée au point le plus bas de l'espace de fraisage (12) et s'étend latéralement depuis celui-ci et que lors de l'usinage à l'état humide un tuyau d'évacuation ou un tube d'évacuation s'étend latérale et/ou vers le bas à partir de l'évacuation (40).

11. Machine de fraisage dentaire selon la revendication 10, **caractérisée en ce qu'**un clapet d'inversion (70) ou une valve d'inversion de l'évacuation (40) est fourni pour la commutation entre l'usinage à l'état humide et sec.

12. Machine de fraisage dentaire selon la revendication 10 ou 11, **caractérisée en ce que** pour l'usinage à sec, une ligne d'aspiration (52) peut être mise sous vide, qui agit sur l'évacuation, et que pour l'usinage humide l'évacuation (40) évacue les eaux usées et/ou les boues produits pendant le fraisage.

13. Machine de fraisage dentaire selon l'une des revendications précédentes, **caractérisée en ce qu'**un clapet d'inversion (70) présente une articulation en tête entre la connexion pour l'usinage à sec et la connexion pour l'usinage à l'état humide et dans la position ouverte pour l'usinage à l'état humide libère une surface inférieure plate coulissante, qui est formée sans contre-dépouille.

14. Machine de fraisage dentaire selon l'une des revendications précédentes, **caractérisée en ce que** l'inclinaison de la paroi de fond (42) au-dessous de la zone d'usinage (30), c'est-à-dire au-dessous du porte-pièce de travail et de l'outil, présente un angle d'inclinaison entre 5 et 60 degrés, de préférence entre 15 et 25 degrés et de manière particulièrement préférée environ 20 degrés.

15. La machine de fraisage dentaire selon l'une des revendications précédentes, **caractérisée en ce que** le flux d'air présente un flux d'entraînement (50) qui s'étend le long de la paroi de fond (42) et est dirigé vers l'évacuation (40).
